(19) **Europäisches Patentamt / European Patent Office / Office européen des brevets**

(11) **EP 3 410 520 B1**

(12) **EUROPEAN PATENT SPECIFICATION**

(45) Date of publication and mention
of the grant of the patent:
**06.11.2019 Bulletin 2019/45**

(21) Application number: **17744110.2**

(22) Date of filing: **23.01.2017**

(51) Int Cl.:
*H01M 4/86* (2006.01)   *C22C 1/08* (2006.01)
*C22C 13/00* (2006.01)   *C22C 19/03* (2006.01)
*C22C 19/05* (2006.01)   *H01M 4/88* (2006.01)
*H01M 8/0202* (2016.01)   *H01M 8/10* (2016.01)

(86) International application number:
**PCT/JP2017/002055**

(87) International publication number:
**WO 2017/130880 (03.08.2017 Gazette 2017/31)**

(54) **FUEL CELL AND METHOD FOR PRODUCING METAL POROUS BODY**

BRENNSTOFFZELLE UND VERFAHREN ZUR HERSTELLUNG EINES PORÖSEN
METALLKÖRPERS

PILE À COMBUSTIBLE ET PROCÉDÉ DE FABRICATION DE CORPS POREUX MÉTALLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2016 JP 2016014150**

(43) Date of publication of application:
**05.12.2018 Bulletin 2018/49**

(73) Proprietor: **Sumitomo Electric Industries, Ltd.
Osaka-shi, Osaka 541-0041 (JP)**

(72) Inventors:
• **MIYAMOTO Kazunari
Itami-shi
Hyogo 664-0016 (JP)**
• **AWAZU Tomoyuki
Itami-shi
Hyogo 664-0016 (JP)**

• **MAJIMA Masatoshi
Itami-shi
Hyogo 664-0016 (JP)**
• **OKUNO Kazuki
Itami-shi
Hyogo 664-0016 (JP)**
• **HIGASHINO Takahiro
Itami-shi
Hyogo 664-0016 (JP)**

(74) Representative: **Boult Wade Tennant LLP
5th Floor, Salisbury Square House
8, Salisbury Square
London EC4Y 8AP (GB)**

(56) References cited:
**WO-A1-2015/133296    JP-A- 2013 008 811
JP-A- 2013 008 811    JP-A- 2014 065 955
JP-A- 2014 089 893    JP-A- 2015 071 804
US-A1- 2014 087 206**

**Description**

Technical Field

The present invention relates to a fuel cell, and a method for producing the porous metal body.

Background Art

In the related art, a method for forming a metal layer on the surface of a porous resin body, such as foamed resin, has been known as a method for producing a porous metal body with a high porosity and a large surface area. For example, Japanese Unexamined Patent Application Publication No. 11-154517 (Patent Literature 1) discloses a method for producing a porous metal body. The method includes subjecting a porous resin body to an electrical conduction treatment and forming an electroplated layer made of metal on the porous resin body, and if necessary, burning the porous resin body out.

Japanese Unexamined Patent Application Publication No. 2012-132083 (Patent Literature 2) discloses a porous metal body made of a nickel-tin alloy. The porous metal body has oxidation resistance, corrosion resistance, and high porosity and functions a current collector for use in electrochemical devices, such as various batteries, capacitors, and fuel cells. Furthermore, Japanese Unexamined Patent Application Publication No. 2012-149282 (Patent Literature 3) discloses a porous metal body made of a nickel-chromium alloy as a porous metal body with high corrosion resistance.

These porous metal bodies have been widely put in practical use as, for example, an active-material-supporting body for nickel electrodes to be used in nickel-cadmium batteries and nickel-hydrogen batteries. Since the purpose of using porous metal bodies in applications pertaining to secondary batteries is to increase the capacity density of batteries, porous metal bodies having a porosity as high as about 95% and thus having good adhesion to active materials are used. JP2013008811A relates to a collector for a capacitor, an electrode using the same, and a capacitor. US2014/087206A1 relates to a porous metal body and method of producing the same.

Citation List

Patent Literature

PTL 1: Japanese Unexamined Patent Application Publication No. 11-154517
PTL2: Japanese Unexamined Patent Application Publication No. 2012-132083
PTL 3: Japanese Unexamined Patent Application Publication No. 2012-149282

Summary of Invention

Solution to Problem

To solve the foregoing issue, the following configuration is employed in the present invention.
Specifically, the invention provides a fuel cell according to claim 1.

Brief Description of Drawings

Figure 1 illustrates a schematic view of an example structure of a fuel cell according to an embodiment of the present invention.
Figure 2 illustrates an X-ray diffraction spectrum of a porous metal body No. 1 produced in Example 1.
Figure 3 illustrates an X-ray diffraction spectrum of a porous metal body No. 23 produced in Comparative Example 1.

Description of Embodiments

[Problems to be Solved by Present Disclosure]

In recent years, there has been an increasing demand for higher power and higher capacity (smaller size) for batteries, capacitors, fuel cells, and other devices.

A fuel cell includes a gas diffusion layer typically formed of a carbon structure or stainless steel (SUS) structure. The carbon structure or SUS structure includes passages, which function as gas channels. Each passage has a width of about 500 μm and forms a continuous line. The passages account for about a half the area of the surface of the carbon structure or SUS structure, the surface being in contact with an electrolyte. The porosity of the gas diffusion layer is thus about 50%.

Since the gas diffusion layer as described above does not have such a high porosity and causes a large pressure drop, the gas diffusion layer hinders the fuel cell from having small size and high power.

The inventors of the present invention have studied about using a porous metal body having a three-dimensional mesh-like structure skeleton as a gas diffusion layer instead of a carbon structure or SUS structure. As a result, the porous metal body having a three-dimensional mesh-like structure skeleton has a very high porosity and can reduce pressure drop. Existing porous metal bodies, however, have a relatively large thickness and increase the volume of fuel cells. There is thus room for further improvements to increase the capacity and the volume power density of fuel cells.

In light of the foregoing issues, the present invention is directed to a porous metal body that allows fuel cells to have small size and high power and is suitably used as a gas diffusion layer.

[Advantageous Effects of Present Disclosure]

The present invention can provide a porous metal body that allows fuel cells to have small size and high power and is suitably used as a gas diffusion layer.

[Description of Embodiments of Invention]

First, embodiments of the present invention will be listed and described.

A fuel cell according to an embodiment of the present invention is according to claim 1.

The nickel content is 50 mass% or more.

The tin content is 5 mass% or more and 25 mass% or less.

The porous metal body has a thickness of 0.10 mm or more and 0.50 mm or less and a porosity of 51% or more and 90% or less.

Hereinafter, the "porous metal body having a three-dimensional mesh-like structure skeleton" is also referred to simply as a "porous metal body". The three-dimensional mesh-like structure refers to a structure having communicating pores, for example, a nonwoven fabric-like structure or a sponge-like structure.

Since the porous metal body described in (1) contains Ni and Sn, the porous metal body has very high corrosion resistance. Thus, Ni is not leached out from the porous metal body when the porous metal body is used as a gas diffusion layer for polymer electrolyte fuel cells (PEFCs). Although strong acid is generated from a membrane electrode assembly (MEA) during operation of a polymer electrolyte fuel cell, the porous metal body described in (1) has corrosion resistance against the strong acid.

The porous metal body described in (1) has sufficiently high porosity and has a smaller thickness than existing porous metal bodies. The porous metal body described in (1) thus enables fuel cells to have small size and high power when the porous metal body is used as a gas diffusion layer in fuel cells.

In the porous metal body according to the present invention, the tin content is 5 mass% or more and 25 mass% or less, and the remaining metal component is preferably nickel. The porous metal body may contain other metal components as unavoidable impurities. It is noted that the nickel content is 50 mass% or more, and nickel is a main component of the porous metal body.

The porous metal body has a porosity of 51% or more and 90% or less.

The porous metal body is a porous metal body that can increase gas diffusibility when used as a gas diffusion layer in fuel cells.

The porous metal body optionally further contains chromium (Cr). The chromium content is 1 mass% or more and 5 mass% or less.

The porous metal body containing chromium has higher corrosion resistance.

The fuel cell is a compact fuel cell that has high power and generates a large amount of power per volume.

The invention also provides a method for producing a porous metal body according to claim 2.

Since the method for producing a porous metal body described in claim 2 uses the electrical conduction material containing a tin powder in subjecting the surface of the skeleton of the resin shaped body to the electrical conduction treatment, a need of a subsequent step of forming a tin-coating layer is eliminated. As a result, the porous metal body can be produced with low costs.

The invention also provides a method for producing a porous metal body according to claim 3.

The order of the formation of the tin-coating layer and the formation of the nickel-coating layer on the surface of the skeleton of the resin shaped body is not limited, and either the tin-coating layer or the nickel-coating layer may be formed first. Since the nickel content is larger than the tin content in the porous metal body, the nickel-coating layer is preferably formed first in consideration of handling of a base after coating.

To produce a porous metal body containing chromium, the method for producing a porous metal body described in claim 2 or claim 3 includes adding a chromium powder or a chromium oxide powder to the electrical conduction treatment material or forming a chromium-coating layer such that the chromium content is 1 mass% or more and 5 mass% or less.

Specifically, a porous metal body containing chromium can be produced using the following methods described in (i) to (vi).

(i) A method for producing a porous metal body having a three-dimensional mesh-like structure skeleton and containing nickel (Ni), tin (Sn), and chromium (Cr) includes:

a step of subjecting the surface of the skeleton of a resin shaped body having a three-dimensional mesh-like structure skeleton to an electrical conduction treatment by applying an electrical conduction material containing a chromium powder or a chromium oxide powder to the surface of the skeleton of the resin shaped body such that the porous metal body has a chromium content of 1 mass% or more and 5 mass% or less;
a step of forming a resin structure by forming a nickel-coating layer and a tin-coating layer on the resin shaped body such that the porous metal body has a tin content of 5 mass% or more and 25 mass% or less and a nickel content of 50 mass% or more;
a step of forming a porous body containing nickel, tin, and chromium by removing the resin shaped body from the resin structure;
a step of diffusing chromium, nickel, and tin by heating the porous body at 1100°C or higher for 5 minutes or longer;
a step of cooling the heated porous body at a rate of 30 °C/min or higher at least until the porous body has a temperature of 550°C or lower; and
a step of rolling the cooled porous body to a thickness of 0.10 mm or more and 0.50 mm or less.

Since a chromium powder is typically an insulator due to chrome oxide on its surface, a chromium powder is used in combination with a conductive powder, such as carbon powder, to form an electrical conduction material.

The order of the formation of the metal coating layers on the resin shaped body is not limited, and either the nickel-coating layer or the tin-coating layer may be formed first. Since the nickel content is larger than the tin content in the porous metal body, the nickel-coating layer is preferably formed first in consideration of handling of a base after coating.

(ii) A method for producing a porous metal body having a three-dimensional mesh-like structure skeleton and containing nickel (Ni), tin (Sn), and chromium (Cr) includes:

a step of subjecting the surface of the skeleton of a resin shaped body having a three-dimensional mesh-like structure skeleton to an electrical conduction treatment;
a step of forming a resin structure by forming a nickel-coating layer, a tin-coating layer, and a chromium-coating layer on the resin shaped body such that the porous metal body has a nickel content of 50 mass% or more, a tin content of 5 mass% or more and 25 mass% or less, and a chromium content of 1 mass% or more and 5 mass% or less;
a step of forming a porous body containing nickel, tin, and chromium by removing the resin shaped body from the resin structure;
a step of diffusing nickel, tin, and chromium by heating the porous body at 1100°C or higher for 5 minutes or longer;
a step of cooling the heated porous body at a rate of 30 °C/min or higher at least until the porous body has a temperature of 550°C or lower; and
a step of rolling the cooled porous body to a thickness of 0.10 mm or more and 0.50 mm or less.

Since the method for producing a porous metal body described in (ii) involves forming the layers of all metal components including nickel, tin, and chromium through electroplating, this production method enables continuous production of the porous metal body and offers high mass productivity. The order of the formation of the metal coating layers on the resin shaped body is not limited, and the nickel-coating layer, the tin-coating layer, and the chromium-coating layer may be formed in any order. Since the nickel content is larger than the tin content and the chromium content in the porous metal body, the nickel-coating layer is preferably formed first in consideration of handling of a base after coating.

(iii) A method for producing a porous metal body having a three-dimensional mesh-like structure skeleton and containing nickel (Ni), tin (Sn), and chromium (Cr) includes:

> a step of subjecting the surface of the skeleton of a resin shaped body having a three-dimensional mesh-like structure skeleton to an electrical conduction treatment by applying an electrical conduction material containing a tin powder to the surface of the skeleton of the resin shaped body such that the porous metal body has a tin content of 5 mass% or more and 25 mass% or less;
> a step of forming a resin structure by forming a nickel-coating layer and a chromium-coating layer on the resin shaped body such that the porous metal body has a nickel content of 50 mass% or more and a chromium content of 1 mass% or more and 5 mass% or less;
> a step of forming a porous body containing nickel, tin, and chromium by removing the resin shaped body from the resin structure;
> a step of diffusing tin, nickel, and chromium by heating the porous body at 1100°C or higher for 5 minutes or longer;
> a step of cooling the heated porous body at a rate of 30 °C/min or higher at least until the porous body has a temperature of 550°C or lower; and
> a step of rolling the cooled porous body to a thickness of 0.10 mm or more and 0.50 mm or less.

Since the method for producing a porous metal body described in (iii) uses the electrical conduction material containing a tin powder in subjecting the surface of the skeleton of the resin shaped body to the electrical conduction treatment, a need of a subsequent step of forming a tin-coating layer is eliminated. As a result, the porous metal body can be produced with low costs. Since a tin powder typically has a large particle size, which makes it difficult for the particles to come into contact with each other, a tin powder is preferably used in combination with a conductive powder with a small particle size, such as carbon powder, to form an electrical conduction material.

The order of the formation of the metal coating layers on the resin shaped body is not limited, and either the nickel-coating layer or the chromium-coating layer may be formed first. Since the nickel content is larger than the chromium content in the porous metal body, the nickel-coating layer is preferably formed first in consideration of handling of a base after coating.

(iv) A method for producing a porous metal body having a three-dimensional mesh-like structure skeleton and containing nickel (Ni), tin (Sn), and chromium (Cr) includes:

> a step of subjecting the surface of the skeleton of a resin shaped body having a three-dimensional mesh-like structure skeleton to an electrical conduction treatment by applying an electrical conduction material containing a tin powder and a chromium powder or a chromium oxide powder to the surface of the skeleton of the resin shaped body such that the porous metal body has a tin content of 5 mass% or more and 25 mass% or less and a chromium content of 1 mass% or more and 5 mass% or less;
> a step of forming a resin structure by forming a nickel-coating layer on the resin shaped body;
> a step of forming a porous body containing nickel, tin, and chromium by removing the resin shaped body from the resin structure;
> a step of diffusing tin, chromium, and nickel by heating the porous body at 1100°C or higher for 5 minutes or longer;
> a step of cooling the heated porous body at a rate of 30 °C/min or higher at least until the porous body has a temperature of 550°C or lower; and
> a step of rolling the cooled porous body to a thickness of 0.10 mm or more and 0.50 mm or less.

Since the method for producing a porous metal body described in (iv) uses the electrical conduction material containing a tin powder and a chromium powder or a chromium oxide powder in subjecting the surface of the skeleton of the resin shaped body to the electrical conduction treatment, a need of a subsequent step of forming a tin-coating layer and a chromium-coating layer is eliminated. In other words, only the nickel-coating layer is formed on the resin shaped body, and thus one coating step suffices. As a result, the porous metal body can be produced with low costs. The electrical conduction material containing a tin powder and a chromium powder or a chromium oxide powder is preferably used in combination with a conductive powder with a small particle size, such as carbon powder, as described above.

(v) A method for producing a porous metal body having a three-dimensional mesh-like structure skeleton and containing nickel (Ni), tin (Sn), and chromium (Cr) includes:

> a step of subjecting the surface of the skeleton of a resin shaped body having a three-dimensional mesh-like structure skeleton to an electrical conduction treatment by sputtering chromium onto the surface of the skeleton of the resin shaped body such that the porous metal body has a chromium content of 1 mass% or more and 5 mass% or less;

a step of forming a resin structure by forming a nickel-coating layer and a tin-coating layer on the resin shaped body such that the porous metal body has a nickel content of 50 mass% or more and a tin content of 5 mass% or more and 25 mass% or less;

a step of forming a porous body containing nickel, tin, and chromium by removing the resin shaped body from the resin structure;

a step of diffusing chromium, nickel, and tin by heating the porous body at 1100°C or higher for 5 minutes or longer;

a step of cooling the heated porous body at a rate of 30 °C/min or higher at least until the porous body has a temperature of 550°C or lower; and

a step of rolling the cooled porous body to a thickness of 0.10 mm or more and 0.50 mm or less.

Since the method for producing a porous metal body described in (v) involves subjecting the resin shaped body to the electrical conduction treatment by sputtering chromium onto the surface of the skeleton of the resin shaped body, a need of a subsequent step of forming a chromium-containing layer is eliminated. As a result, the porous metal body can be produced with low costs.

The order of the formation of the metal coating layers on the resin shaped body is not limited, and either the nickel-coating layer or the tin-coating layer may be formed first. Since the nickel content is larger than the tin content in the porous metal body, the nickel-coating layer is preferably formed first in consideration of handling of a base after coating.

(vi) A method for producing a porous metal body having a three-dimensional mesh-like structure skeleton and containing nickel (Ni), tin (Sn), and chromium (Cr) includes:

a step of subjecting the surface of the skeleton of a resin shaped body having a three-dimensional mesh-like structure skeleton to an electrical conduction treatment by sputtering tin onto the surface of the skeleton of the resin shaped body such that the porous metal body has a tin content of 5 mass % or more and 25 mass% or less;

a step of forming a resin structure by forming a nickel-coating layer and a chromium-coating layer on the resin shaped body such that the porous metal body has a nickel content of 50 mass% or more and a chromium content of 1 mass% or more and 5 mass% or less;

a step of forming a porous body containing nickel, tin, and chromium by removing the resin shaped body from the resin structure;

a step of diffusing tin, nickel, and chromium by heating the porous body at 1100°C or higher for 5 minutes or longer;

a step of cooling the heated porous body at a rate of 30 °C/min or higher at least until the porous body has a temperature of 550°C or lower; and

a step of rolling the cooled porous body to a thickness of 0.10 mm or more and 0.50 mm or less.

Since the method for producing a porous metal body described in (vi) involves subjecting the resin shaped body to the electrical conduction treatment by sputtering tin onto the surface of the skeleton of the resin shaped body, a need of a subsequent step of forming a tin-coating layer is eliminated. As a result, the porous metal body can be produced with low costs. The order of the formation of the metal coating layers on the resin shaped body is not limited, and either the nickel-coating layer or the chromium-coating layer may be formed first. Since the nickel content is larger than the tin content in the porous metal body, the nickel-coating layer is preferably formed first in consideration of handling of a base after coating.

[Detailed Description of Embodiments of Invention]

Specific examples of the porous metal body contained in the fuel cell according to the embodiments of the present invention will be described below. The present invention is not limited to these examples.

<Porous Metal Body>

A porous metal body contained in the fuel cell according to an embodiment of the present invention (hereinafter "a porous metal body according to an embodiment of the present invention") is a porous metal body having a three-dimensional mesh-like structure skeleton and containing at least nickel (Ni) and tin (Sn). The porous metal body has a nickel content of 50 mass% or more and a tin content of 5 mass% or more and 25 mass% or less.

In general, nickel and tin form an alloy (NiSn) and, at a larger proportion of tin, form $Ni_3Sn$ and $Ni_3Sn_2$, which are intermetallic compounds. $Ni_3Sn$ has high corrosion resistance and high hardness, but it is relatively brittle. $Ni_3Sn_2$ is also relatively brittle.

The porous metal body according to the embodiment of the present invention is found to have slight deposition of $Ni_3Sn$, but it is very small in amount. No deposition of $Ni_3Sn_2$ is found. The entire porous metal body has high corrosion resistance and toughness.

Since the porous metal body according to the embodiment of the present invention contains nickel and tin as described above, the porous metal body has high corrosion resistance. In the case where an existing porous metal body made of nickel is used as a gas diffusion layer in polymer electrolyte fuel cells, the porous metal body on the air electrode side may corrode. The porous metal body according to the embodiment of the present invention has high corrosion resistance and, therefore, can preferably be used as a gas diffusion layer on the air electrode side in polymer electrolyte fuel cells or solid oxide fuel cells (SOFCs).

If the tin content in the porous metal body is less than 5 mass%, the effect of improving the corrosion resistance is insufficient. If the tin content is more than 25 mass%, a large amount of $Ni_3Sn$ is generated, and the porous metal body becomes hard and brittle. From these viewpoints, the tin content is preferably 5 mass% or more and 20 mass% or less, and more preferably 10 mass% or more and 15 mass% or less.

In the porous metal body, the remaining metal component other than tin is preferably nickel. The porous metal body may contain other metal components as unavoidable impurities. The porous metal body may intentionally contain other components unless high corrosion resistance, which is an advantageous effect of the porous metal body of the present invention, is impaired. The nickel content is 50 mass% or more in the porous metal body.

The thickness of the porous metal body is 0.10 mm or more and 0.50 mm or less. Since the porous metal body according to the embodiment of the present invention contains a trace amount of $Ni_3Sn$ deposition and thus has toughness as described above, the porous metal body can be thinned by a rolling process.

The porous metal body having a thickness of 0.10 mm or more and 0.50 mm or less can contribute to downsizing of fuel cells when used as a gas diffusion layer in fuel cells. The porous metal body causes less gas pressure drop and has high gas diffusibility, which enables fuel cells to have high power. If the thickness of the porous metal body is less than 0.10 mm, the porosity is significantly low, which increases the pressure drop in supplying a fuel gas to a fuel cell and reduces the amount of the fuel gas supplied to the fuel cell. This results in low power generation performance, particularly, poor output characteristic, of the fuel cell. If the thickness of the porous metal body is more than 0.50 mm, the porous metal body makes a small contribution to downsizing of a fuel cell. From these viewpoints, the thickness of the porous metal body is preferably 0.15 mm or more and 0.40 mm or less, and more preferably 0.20 mm or more and 0.30 mm or less.

The porosity of the porous metal body according to the embodiment of the present invention is 51% or more and 90% or less. When the porosity is 51% or more, the use of the porous metal body as a gas diffusion layer in fuel cells can reduce the gas pressure drop. When the porosity is 90% or less, the use of the porous metal body as a gas diffusion layer in fuel cells can increase the gas diffusibility. This is because, due to the three-dimensional mesh-like structure skeleton of the porous metal body, the frequency with which gas strikes the skeleton of the porous metal body and diffuses increases with decreasing porosity. From these viewpoints, the porosity of the porous metal body according to the embodiment of the present invention is more preferably 60% or more and 85% or less, and still more preferably 65% or more and 80% or less. The porosity of the porous metal body is defined by the following formula.

$$\text{Porosity} = (1 - (\text{weight of porous material [g]}/(\text{volume of porous material [cm}^3] \times \text{material density [g/cm}^3]))) \times 100 \ [\%]$$

Preferably, the porous metal body according to the embodiment of the present invention further contains chromium (Cr), and the chromium content is 1 mass% or more and 5 mass% or less. A chromium content of 1 mass% or more can improve the corrosion resistance of the porous metal body. A chromium content of 5 mass% or less prevents the porous metal body from having high electric resistance. From these viewpoints, the chromium content of the porous metal body is preferably 2 mass% or more and 5 mass% or less, and more preferably 2 mass% or more and 4 mass% or less.

In the porous metal body according to the embodiment of the present invention, the total coating weight of all metals including nickel and tin is appropriately changed depending on application of the porous metal body. For example, the coating weight is preferably 200 g/m² or more and 2000 g/m² or less, more preferably 300 g/m² or more and 1200 g/m² or less, and still more preferably 400 g/m² or more and 1000 g/m² or less. When the total metal coating weight is 200 g/m² or more, the porous metal body has sufficiently high strength. When the total metal coating weight is 2000 g/mor less, increases in production costs can be suppressed.

The coating weight of the porous metal body is obtained by dividing the weight of the porous metal body by the apparent volume.

The average cell size of the porous metal body according to the embodiment of the present invention is appropriately changed depending on application of the porous metal body. For example, the average cell size of the porous metal body when observed from above is preferably 150 $\mu$m or more and 1000 $\mu$m or less, more preferably 300 $\mu$m or more and 700 $\mu$m or less, and still more preferably 350 $\mu$m or more and 600 $\mu$m or less.

The average cell size of the porous metal body when it is used as a gas diffusion layer is preferably 150 $\mu$m or more and 1000 $\mu$m or less, more preferably 200 $\mu$m or more and 700 $\mu$m or less, and still more preferably 300 $\mu$m or more and 600 $\mu$m or less. When the average cell size is 150 $\mu$m or more, the pressure drop in supplying a fuel gas can be reduced. When the average cell size is 1000 $\mu$m or less, the uniform diffusion of the fuel gas to the MEA can be promoted.

The average cell size is a value calculated from the reciprocal of the number of cells in the porous metal body. The number of cells is a count of the number of cells on the outermost surface that intersect a line 1 inch long drawn on the porous metal body surface. The unit is cells/inch. It is noted that 1 inch equals 2.54 centimeters.

<Fuel Cell>

A fuel cell according to the present invention is according to claim 1. The type of fuel cell is not limited. The fuel cell may be a polymer electrolyte fuel cell or a solid oxide fuel cell.

Hereinafter, a polymer electrolyte fuel cell is described as an example.

The polymer electrolyte fuel cell can include an ion exchange membrane and other members known in the art.

For example, a membrane electrode assembly, which is an assembly of an ion exchange membrane and catalyst layers, may be a commercially available product without any modification. The cathode and the anode are gas diffusion electrodes each having about 0.5 mg/cm$^2$ of a platinum catalyst and are integrated with each other by using Nafion (registered trademark) 112 as an ion exchange membrane.

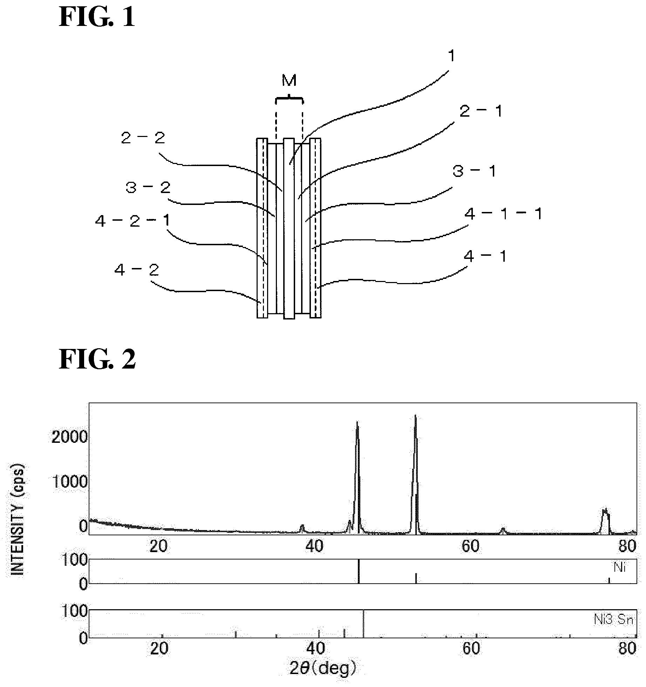

Fig. 1 is a cross-sectional schematic view of a single polymer electrolyte fuel cell.

In Fig. 1, the single cell includes a membrane electrode assembly (MEA) M, current collectors (3-1, 3-2), gas diffusion layers (4-1-1, 4-2-1), and separators (4-1, 4-2).

The MEA (M) includes an ion exchange membrane 1 and gas diffusion electrodes (2-1, 2-2), which are active carbon layers containing a platinum catalyst. The gas diffusion electrode (2-1) is in contact with one surface of the ion exchange membrane 1, and the gas diffusion electrode (2-2) is in contact with the other surface of the ion exchange membrane 1.

The gas diffusion electrode (2-1) is an anode (fuel electrode), and the gas diffusion electrode (2-2) is a cathode (air electrode).

The current collector (3-1), the gas diffusion layer (4-1-1), and the separator (4-1) are deposited sequentially from inside on one surface of the gas diffusion electrode (2-1).

The current collector (3-2), the gas diffusion layer (4-2-1), and the separator (4-2) are deposited sequentially from inside on one surface of the gas diffusion electrode (2-2).

The current collectors (3-1, 3-2) have functions of current collection and gas diffusion. The current collectors (3-1, 3-2) may be made of, for example, water-repellent treated carbon paper. Carbon paper may have a porosity of about 50% and may have water repellency imparted by addition of about 15% fluororesin.

The gas diffusion layers (4-1-1, 4-2-1) are formed of the porous metal body according to the embodiment of the present invention and serve as gas supply-discharge channels. The porous metal body according to the embodiment of the present invention, which is thinner than a porous metal body known in the art, can downsize fuel cells.

The separators (4-1, 4-2) may be formed of, for example, commercially available graphite plates.

Although Fig. 1 illustrates a single cell, single cells are normally stacked in series with separators each interposed therebetween for use at a desired voltage.

<Method for Producing Porous Metal Body>

The porous metal body according to the embodiment of the present invention can be produced by using various methods. Examples of the production method include the methods described in claims 2 and 3, and (i) to (vi).

The production method will be described below in detail.

(Resin Shaped Body Having Three-Dimensional Mesh-Like Structure Skeleton)

The resin shaped body having a three-dimensional mesh-like structure skeleton for use as a base may be formed of a known or commercially available product as long as being porous. The resin shaped body may be formed of, for example, resin foam, nonwoven fabric, felt, or woven fabric. These materials can be used in combination if necessary. The material is not limited, but can preferably be removed by a burning process after metal coating. The material is preferably flexible in consideration of handling of the resin shaped body particularly because a sheet-shaped material if having high rigidity may break.

The resin shaped body is preferably formed of a resin foam. Examples of the resin foam include foamed urethane, foamed styrene, and foamed melamine resin. Among these, foamed urethane is preferred particularly due to its high porosity.

The porosity of the resin shaped body is not limited and is typically about 60% or more and about 97% or less, and preferably about 80% or more and about 96% or less. The thickness of the resin shaped body is not limited and appropriately set depending on application of the obtained porous metal body. The thickness of the resin shaped body is typically about 600 $\mu$m or more and about 5000 $\mu$m or less, and preferably about 800 $\mu$m or more and about 2000 $\mu$m or less. The case where a foamed resin is used as a resin shaped body having a three-dimensional mesh-like structure skeleton will be described below as an example.

(Electrical Conduction Treatment)

The electrical conduction treatment is not limited as long as it can form a conductive layer on the surface of the skeleton of the resin shaped body. Examples of the material of the conductive layer (conductive coating layer) include metals, such as nickel, tin, chromium, copper, iron, tungsten, titanium, and stainless steel; and carbon powders, such as a carbon powder.

Specific examples of suitable electrical conduction treatments include application of an electrical conduction material produced by addition of a binder to a graphite powder or a metal powder made of, for example, nickel, tin, or chromium; electroless plating treatments; and gas-phase treatments, such as sputtering and vacuum deposition-ion plating.

An electroless plating treatment using nickel involves, for example, immersing a foamed resin in a known electroless nickel plating bath, such as a nickel sulfate aqueous solution containing sodium hypophosphite as a reducing agent. If necessary, before plating bath immersion, the resin shaped body may be immersed in an activation liquid (cleaning liquid available from Japan Kanigen Co., Ltd.) containing a trace amount of palladium ions.

A sputtering treatment using nickel, tin, or chromium involves, for example, first attaching a resin shaped body to a substrate holder, and applying a direct current voltage between the holder and a target (nickel, tin, or chromium) while introducing an inert gas. This process causes the ionized inert gas to collide with nickel, tin, or chromium, and the ejected nickel particles, tin particles, or chromium particles are deposited on the surface of the resin shaped body.

The application of an electrical conduction material, such as a carbon powder or a metal powder, may be, for example, application of a mixture of a binder and a conductive powder (e.g., a powder made of a metal material such as stainless steel, a powder made of carbon such as crystalline graphite or amorphous carbon black) to the surface of the skeleton of the resin shaped body. This method may use a tin powder and a carbon powder or may use a chromium powder or a chromium oxide powder and a carbon powder. In this case, the amount of the tin powder may be set such that the porous metal body has a tin content of 5 mass% or more and 25 mass% or less. The amount of the chromium powder or chromium oxide powder when used may be set such that the porous metal body has a chromium content of 1 mass% or more and 5 mass% or less. This process eliminates a need of a tin plating step or a chromium plating step.

When the tin powder is used or the chromium powder or the chromium oxide powder is used, the powder preferably has a particle size of about 0.1 $\mu$m or more and about 10 $\mu$m or less and more preferably has a particle size of about 0.5 $\mu$m or more and about 5 $\mu$m or less in view of the diffusibility of the powder to nickel.

Examples of carbon powders used include, but are not limited to, carbon black, activated carbon, and graphite. Carbon black is used for the purpose of making conductivity uniform, and graphite fine powder is used to improve the strength of the conductive coating layer. It is preferred to add activated carbon to form a mixture. For example, a thickener, such as carboxymethyl cellulose (CMC), commonly used to prepare a slurry may be added. This slurry is applied to the skeleton of a cut piece of a resin shaped body having a desired thickness and a plate shape or strip shape, and the slurry is dried to form a conductive surface of the skeleton of the resin shaped body.

The coating weight (deposition weight) of the conductive coating layer is controlled such that the porous metal body has a tin content of 5 mass% or more and 25 mass% or less in terms of the final metal composition containing the coating weights of nickel plating, tin plating, or chromium plating in subsequent processes.

When nickel is used in the conductive coating layer, the surface of the resin shaped body is continuously coated with nickel. The coating weight is not limited and is typically about 5 g/m$^2$ or more and about 15 g/m$^2$ or less, and preferably about 7 g/m$^2$ or more and about 10 g/m$^2$ or less.

(Formation of Nickel-Coating Layer)

A nickel-coating layer may be formed by using either electroless nickel plating or electrolysis nickel plating, and electrolysis nickel plating is preferred due to higher efficiency. The electrolysis nickel plating treatment may be performed in accordance with an ordinary method. The plating bath used in the electrolysis nickel plating treatment may be a known or commercially available product. Examples of the plating bath include a Watts bath, a chloride bath, and a sulfamate bath.

The resin structure having the surface coated with the electrical conduction material through electroless plating or sputtering is immersed in a plating bath, and a direct current or a pulse interrupted current is passed by connecting the resin structure to a cathode and a nickel counter electrode plate to an anode to further form the nickel-coating layer on the electrical conduction material.

The coating weight of the electrolysis nickel coating layer is controlled such that the porous metal body has a nickel content of 50 mass% or more and a tin content of 5 mass% or more and 25 mass% or less in terms of the final metal composition.

(Formation of Tin-Coating Layer)

The step of forming a tin-coating layer on the resin structure may be performed, for example, as described below. A plating bath having a composition containing 55 g/L of tin (II) sulfate, 100 g/L of sulfuric acid, 100 g/L of cresol sulfonic acid, 2 g/L of gelatin, and 1 g/L of β-naphthol is prepared as a sulfate bath. The tin-coating layer can be formed with agitation (cathode oscillation) at 2 m/min under the conditions of at a cathode current density of 2A/dm$^2$, an anode current density of 1 A/dm$^2$ or less, and a temperature of 20°C.

The coating weight of tin plating is controlled such that the porous metal body has a nickel content of 50 mass% or more and a tin content of 5 mass% or more and 25 mass% or less in terms of the final metal composition.

To improve the adherence of the tin plating, preferably, the surface oxide film of the porous metal body is removed by strike nickel plating just before tin plating, and the porous metal body is placed in a tin plating liquid without drying. This process can increase the adherence of the coating layer.

For example, strike nickel plating may be performed under the following conditions. Specifically, a Wood's strike nickel bath having a composition containing 240 g/L of nickel chloride and 125 ml/L of hydrochloric acid (specific gravity: about 1.18) is prepared and adjusted to have room temperature, and nickel or carbon is used as an anode.

In summary, the plating procedure includes degreasing with Ace Clean (cathode electrolytic degreasing: 5 A/dm$^2$ × 1 min); washing with hot water, washing with cold water, acid activation (immersion in hydrochloric acid for 1 min), Wood's strike nickel plating (5 to 10 A/dm$^2$ × 1 min), washing and tin plating without drying, washing with cold water; and drying.

(Formation of Chromium-Coating Layer)

When a chromium-coating layer is formed on the resin structure, for example, the following method can be employed. Specifically, a known chromium plating method can be employed, and a known or commercially available plating bath can be used. For example, a hexavalent chromium bath or a trivalent chromium bath can be used. The chromium-coating layer can be formed as follows: immersing a porous body targeted for plating in the chromium plating bath; and connecting the porous body to a cathode and connecting a chromium plate to an anode as a counter electrode; and passing a direct current or a pulse interrupted current.

The coating weight of chromium plating is controlled such that the porous metal body has a nickel content is 50 mass% or more, a tin content of 5 mass% or more and 25 mass% or less, and a chromium content of 1 mass% or more and 5 mass% or less in terms of the final metal composition.

(Circulation of Plating Liquid during Plating)

In general, it is difficult to uniformly plate the inside of a base such as a resin shaped body having a three-dimensional mesh-like structure skeleton. To ensure adhesion to the inside and to reduce a difference in plating deposition weight between the inside and the outside, a plating liquid is preferably circulated. The circulation can be achieved by a method of, for example, using a pump or a fan placed in a plating tank. When the plating liquid is directed to the resin shaped body using such a method or the resin shaped body is placed adjacent to a suction port, the plating liquid tends to flow through the inside of the resin shaped body, which is effective.

(Removal of Resin Shaped Body)

A method for removing the resin shaped body, which is used as a base, from the resin structure having the metal-coating layer on the surface of the skeleton is not limited, and example of the method include treatments with chemicals and combustion removal through burning. In the case of burning, the resin structure is heated, for example, in an oxidizing atmosphere, such as the air, at about 600°C or higher. The removal of the resin shaped body provides a porous body containing nickel and tin or a porous body containing nickel, tin, and chromium.

(Step of Diffusing Nickel and Tin or Diffusing Nickel, Tin, and Chromium)

Since, without any treatment after metal plating, a large area of the skeleton surface of the porous body may be coated with nickel, a heat treatment is needed to diffuse a nickel component, a tin component, and a chromium component. The nickel component, the tin component, and the chromium component can be diffused in an inert atmosphere (e.g., at a reduced pressure, or in nitrogen or argon) or a reducing atmosphere (hydrogen).

The heat treatment at an excessively low temperature may elongate the time to diffuse such components. The heat treatment at an excessively high temperature may soften the porous metal body depending on the tin and chromium contents, so that the porous structure may fracture under its own weight. Thus, the heat treatment temperature is preferably in the range of 1100°C or higher and 1250°C or lower. The heat treatment temperature is more preferably 1100°C or higher and 1200°C or lower, and still more preferably 1100°C or higher and 1150°C or lower. When chromium is absent, the heat treatment temperature is preferably 1000°C or higher and 1250°C or lower, more preferably 1100°C or higher and 1200°C or lower, and still more preferably 1100°C or higher and 1150°C or lower.

The heat treatment time is 5 minutes or longer. To obtain uniform diffusion, the heat treatment time is preferably 15 minutes or longer and more preferably 30 minutes or longer.

(Step of Cooling)

The method for producing a porous metal body according the embodiment of the present invention includes a step of cooling the heated porous body at a rate of 30 °C/min or higher at least until the porous body has a temperature of 550°C or lower.

In an existing method for producing a porous metal body containing two or more metal components, the porous metal body is returned to room temperature through slow cooling rather than rapid cooling after the metal components are diffused by a heat treatment. However, diligent studies carried out by, for example, the inventors have revealed that a porous metal body containing nickel and tin hardens and, therefore, the porous metal body cannot be rolled to about 0.50 mm unless the porous metal body is rapidly cooled after the metal components are diffused by a heat treatment. In other words, in the method for producing a porous metal body according to the embodiment of the present invention, rapid cooling of the heated porous body at a rate of 30 °C/min or higher can impart toughness to the porous body. This allows the porous body to be rolled to 0.10 mm or more and 0.50 mm or less, whereby the porous metal body according to the embodiment of the present invention can be produced.

From the above viewpoint, the rate of cooling is preferably as high as possible. A rate of cooling of 30 °C/min or higher is high enough. In the heat treatment, the porous body has a temperature of about 1000°C to about 1250°C. After the porous body is rapidly cooled to a temperature at which a high-temperature phase of $Ni_3Sn$ is not separated into a low-temperature phase and a NiSn phase, the porous body may be cooled slowly. Therefore, the porous body may be cooled at a rate of 30 °C/min or higher until the temperature of the porous body reaches 550°C or lower. Of course, the porous body may be cooled at a rate of 30 °C/min or higher after the temperature of the porous body reaches 550°C or lower.

(Step of Rolling Porous Body)

As described above, the thickness of the porous metal body according to the embodiment of the present invention can be adjusted by using a rolling process because it has toughness. The cooled porous body is thus rolled to a thickness of 0.10 mm or more and 0.50 mm or less by using, for example, a roller press machine or a flat press machine. Rolling the porous body allows the obtained porous metal body to have a uniform thickness and eliminates variations in surface unevenness. In addition, the porosity of the porous metal body can be reduced.

The porous body is slightly elongated by rolling, but the porous body is not deformed to such an extent that the average cell size as viewed from above changes. Like the average cell size after rolling, the average cell size before rolling when the porous body is viewed from above is preferably 150 $\mu$m or more and 1000 $\mu$m or less, more preferably 200 $\mu$m or more and 700 $\mu$m or less, and still more preferably 300 $\mu$m or more and 600 $\mu$m or less.

The porosity of the porous body before rolling is preferably 80% or more and 97% or less, and more preferably 85% or more and 95% or less. The porosity of the porous metal body after the porous metal body is rolled to a thickness of 0.10 mm or more and 0.50 mm or less is preferably 51% or more and 90% or less, more preferably 60% or more and 85% or less, and still more preferably 65% or more and 80% or less.

In the case where the porous metal body is used as a gas diffusion layer in a fuel cell, the porous metal body may be produced as follows: forming a porous metal body having a thickness slightly larger than the thickness of a gas diffusion layer when installed in the fuel cell; and deforming the porous metal body to a thickness of 0.10 mm or more and 0.50 mm or less under a pressure generated by installation to the fuel cell. At this time, the porous metal body is slightly rolled in advance so as to have a thickness slightly larger than the thickness of a gas diffusion layer when installed in the fuel cell. This can increase the adherence between the MEA and the gas diffusion layer (porous metal body) in the fuel cell.

(Metal Coating Weight)

The total metal coating weight after the formation of the conductive coating layer, the nickel-coating layer, and the tin-coating layer is appropriately changed depending on application of the porous metal body. The total metal coating weight is preferably, for example, 200 $g/m^2$ or more and 2000 $g/m^2$ or less. The total metal coating weight is more preferably 300 $g/m^2$ or more and 1200 $g/m^2$ or less, and still more preferably 400 $g/m^2$ or more and 1000 $g/m^2$ or less. When the total metal coating weight is 200 $g/m^2$ or more, the porous metal body has sufficiently high strength. When the total metal coating weight is 2000 $g/m^2$ or less, increases in production costs can be suppressed.

<Hydrogen Production Method and Hydrogen Production Apparatus>

The porous metal body according to the embodiment of the present invention can also be used suitably in applications pertaining to hydrogen production through water electrolysis in addition to applications pertaining to fuel cells. The hydrogen production methods are roughly classified into [1] an alkaline water electrolysis method, [2] a PEM (polymer electrolyte membrane) method, and [3] a SOEC (solid oxide electrolysis cell) method. These methods can use the porous metal body.

The alkaline water electrolysis method [1] involves immersing an anode and a cathode in a strong alkaline aqueous solution and applying a voltage to cause water electrolysis. The use of the porous metal body as an electrode can increase the contact area between water and the electrode and thus can increase the efficiency of water electrolysis.

In the method for producing hydrogen through the alkaline water electrolysis method, the cell size of the porous metal body as viewed from above is preferably 100 $\mu$m or more and 5000 $\mu$m or less. When the cell size of the porous metal body as viewed from above is 100 $\mu$m or more, it is possible to suppress decreases in the contact area between water and the electrode due to clogging of the pores of the porous metal body with generated bubbles of hydrogen and oxygen.

When the cell size of the porous metal body as viewed from above is 5000 $\mu$m or less, the electrode has a sufficiently large surface area, which can improve the efficiency of water electrolysis. From the same viewpoint, the cell size of the porous metal body as viewed from above is preferably 400 $\mu$m or more and 4000 $\mu$m or less.

The thickness and the metal weight of the porous metal body are appropriately selected depending on the size of equipment because a large electrode area causes deformation or the like. To ensure both removal of bubbles and a suitable surface area, plural porous metal bodies with different cell sizes can be used in combination.

The PEM method [2] is a method for electrolyzing water using a polymer electrolyte membrane. In this method, an anode and a cathode are placed on the opposed sides of a polymer electrolyte membrane, and a voltage is applied while water is supplied to the anode side. Hydrogen ions generated by water electrolysis are thus moved to the cathode side across the polymer electrolyte membrane and taken out as hydrogen on the cathode side. The operating temperature is about 100°C. A PEM electrolyzer has a similar structure but operates on the opposite principle to a polymer electrolyte fuel cell, which generates power using hydrogen and oxygen and discharges water. Since the anode side is completely separated from the cathode side, the PEM method has an advantage that high-purity hydrogen can be taken out. Since water or hydrogen gas needs to pass through the electrode for both the anode and the cathode, the electrode needs a conductive porous body.

Since the porous metal body according to the embodiment of the present invention has high porosity and good electrical conductivity, the porous metal body can also be used suitably in water electrolysis through the PEM method as in a polymer electrolyte fuel cell. In the method for producing hydrogen using the PEM method, the cell size of the porous metal body as viewed from above is preferably 150 $\mu$m or more and 1000 $\mu$m or less. When the cell size of the porous metal body as viewed from above is 150 $\mu$m or more, it is possible to suppress decreases in the contact area between water and the polymer electrolyte membrane due to clogging of the pores of the porous metal body with generated bubbles of hydrogen and oxygen. When the cell size of the porous metal body as viewed from above is 1000 $\mu$m or less, sufficient water retention can be ensured, which inhibits water from passing through the porous metal body before reaction and enables efficient water electrolysis. From the same viewpoint, the cell size of the porous metal body as viewed from above is preferably 200 $\mu$m or more and 700 $\mu$m or less, and more preferably 300 $\mu$m or more and 600 $\mu$m or less.

A porous metal body No. 22 was produced in the same manner as that for the porous metal body 21 except that chromium plating with a coating weight of 20 $g/m^2$ was performed in the production of the porous metal body No. 21.

The chromium content of the porous metal body No. 22 was 4.6 mass%.

[Comparative Example 1]

- Porous Metal Body No. 23-

A porous metal body No. 23 was produced in the same manner as that for the porous metal body 1 except that the coating weight of nickel plating was 350 g/m$^2$, the coating weight of tin plating was 10 g/m$^2$, and the tin content was 3 mass% in the production of the porous metal body 1.

[Comparative Example 2]

- Porous Metal Body No. 24 -

A porous metal body No. 24 was produced in the same manner as that for the porous metal body No. 8 except that the porous metal body was rolled to a thickness of 0.008 mm in the production of the porous metal body 8.

[Comparative Example 3]

- Porous Metal Body No. 25 -

In the production of the porous metal body No. 1, the porous metal body was slowly cooled at a rate of 10 °C/min in a furnace rather than rapid cooling. As a result, the porous metal body hardened, and the porous metal body fractured when about to be rolled to a thickness of 0.5 mm or less. For this, the porous metal body was rolled to a thickness of 0.80 mm to provide a porous metal body No. 25.

[Comparative Example 4]

- Porous Metal Body No. 26 -

In the production of the porous metal body No. 2, the porous metal body was slowly cooled at a rate of 10 °C/min in a furnace rather than rapid cooling. As a result, the porous metal body hardened, and the porous metal body fractured when about to be rolled to a thickness of 0.5 mm or less. For this, the porous metal body was rolled to a thickness good electrical conductivity, high oxidation resistance, and high heat resistance, the porous metal body can also be used suitably in water electrolysis through the SOEC method as in a solid oxide fuel cell. The electrode on the oxidizing atmosphere side is preferably formed of a Ni alloy containing a metal with high oxidation resistance, such as Cr.

In the method for producing hydrogen through the SOEC method, the cell size of the porous metal body as viewed from above is preferably 150 $\mu$m or more and 1000 $\mu$m or less. When the cell size of the porous metal body as viewed from above is 150 $\mu$m or more, it is possible to suppress decreases in the contact area between water vapor and the solid oxide electrolyte membrane due to clogging of the pores of the porous metal body with water vapor or generated hydrogen. When the cell size of the porous metal body as viewed from above is 1000 $\mu$m or less, an excessively small pressure drop inhibits water vapor from passing through the porous metal body before causing sufficient reaction. From the same viewpoint, the cell size of the porous metal body as viewed from above is preferably 200 $\mu$m or more and 700 $\mu$m or less, and more preferably 300 $\mu$m or more and 600 $\mu$m or less.

The thickness and the metal weight of the porous metal body are appropriately selected depending on the size of equipment, but the thickness and the metal weight are preferably controlled such that the porosity is 30% or more because an excessively small porosity results in a large drop in the pressure for introducing water vapor. Since the electrical continuity between the solid oxide electrolyte membrane and the electrode is achieved by pressure bonding in the SOEC method, the metal weight needs to be controlled such that an increase in electric resistance due to deformation and creep under pressure is in a practically acceptable range. The metal weight is preferably about 200 g/m$^2$ or more and about 2000 g/m$^2$ or less, more preferably about 300 g/m$^2$ or more and about 1200 g/m$^2$ or less, and still more preferably about 400 g/m$^2$ or more and about 1000 g/m$^2$ or less. To ensure both a suitable porosity and electrical connection, plural porous metal bodies with different cell sizes can be used in combination.

<Appendixes>

The above description includes features appended below.

(Appendix 1)

A method for producing hydrogen by electrolyzing water using, as an electrode, a porous metal body having a three-dimensional mesh-like structure skeleton and containing at least nickel (Ni) and tin (Sn), wherein the nickel content is 50 mass% or more,
the tin content is 5 mass% or more and 25 mass% or less, and
the porous metal body has a thickness of 0.10 mm or more and 0.50 mm or less.

(Appendix 2)

The method for producing hydrogen according to Appendix 1, wherein the porous metal body has a porosity of 51% or more and 90% or less.

(Appendix 3)

The method for producing hydrogen according to Appendix 1 or 2, wherein the porous metal body further contains chromium (Cr), and the chromium content is 1 mass% or more and 5 mass% or less.

(Appendix 4)

The method for producing hydrogen according to any one of Appendixes 1 to 3, wherein the water is a strong alkaline aqueous solution.

(Appendix 5)

The method for producing hydrogen according to any one of Appendixes 1 to 3, wherein hydrogen is generated on the cathode side as follows: placing the porous metal body on each side of a polymer electrolyte membrane such that the porous metal bodies are in contact with the polymer electrolyte membrane; operating the porous metal bodies as an anode and a cathode, respectively; and supplying water to the anode side to cause electrolysis.

(Appendix 6)

The method for producing hydrogen according to any one of Appendixes 1 to 3, wherein hydrogen is generated on the cathode side as follows: placing the porous metal body on each side of a solid oxide electrolyte membrane such that the porous metal bodies are in contact with the solid oxide electrolyte membrane; operating the porous metal bodies as an anode and a cathode, respectively; and supplying water vapor to the anode side to electrolyze water.

(Appendix 7)

A hydrogen production apparatus capable of generating hydrogen through water electrolysis, the apparatus including:

as an electrode, a porous metal body having a three-dimensional mesh-like structure skeleton and containing at least nickel (Ni) and tin (Sn), wherein
the nickel content is 50 mass% or more,
the tin content is 5 mass% or more and 25 mass% or less, and
the porous metal body has a thickness of 0.10 mm or more and 0.50 mm or less.

(Appendix 8)

The hydrogen production apparatus according to Appendix 7, wherein the porous metal body has a porosity of 51% or more and 90% or less.

(Appendix 9)

The hydrogen production apparatus according to Appendix 7 or 8, wherein the porous metal body further contains chromium (Cr), and the chromium content is 1 mass% or more and 5 mass% or less.

(Appendix 10)

The hydrogen production apparatus according to any one of Appendixes 7 to 9, wherein the water is a strong alkaline aqueous solution.

(Appendix 11)

The hydrogen production apparatus according to any one of Appendixes 7 to 9, wherein
the apparatus includes an anode and a cathode on the opposed sides of a polymer electrolyte membrane,
the anode and the cathode are in contact with the polymer electrolyte membrane,
the apparatus is capable of generating hydrogen on the cathode side through electrolysis of water supplied to the anode side, and
the porous metal body is used as at least one of the anode and the cathode.

(Appendix 12)

The hydrogen production apparatus according to any one of Appendixes 7 to 9, wherein
the apparatus includes an anode and a cathode on the opposed sides of a solid oxide electrolyte membrane,
the anode and the cathode are in contact with the polymer electrolyte membrane,
the apparatus is capable of generating hydrogen on the cathode side through electrolysis of water vapor supplied to the anode side, and
the porous metal body is used as at least one of the anode and the cathode.

EXAMPLES

The present invention will be described below in more detail by way of Examples. These Examples are illustrative only, and the porous metal body and the like of the present invention are not limited to these Examples. The scope of the present invention is described in the claims and includes all modifications within the meaning and range of equivalency of the claims.

[Example 1]

- Porous Metal Body No. 1 -

(Electrical Conduction Treatment for Resin Shaped Body Having Three-Dimensional Mesh-Like Structure Skeleton)

As a resin shaped body having a three-dimensional mesh-like structure skeleton, a polyurethane sheet 1.0 mm thick (50 to 54 cells/inch, average cell size: 510 $\mu$m, porosity: 96 vol%) was used. To make the surface of the skeleton of the polyurethane sheet conductive, an electrical conduction material was prepared by dispersing 100 g of a graphite powder with a particle size of 5 $\mu$m in 0.5 L of a 10% acrylic ester resin aqueous solution. The polyurethane sheet was then immersed continuously in the coating material, squeezed with a roll, and then dried, whereby an electrical conduction treatment was performed on the surface of the skeleton of the polyurethane sheet. This treatment formed a conductive coating layer on the surface of the polyurethane sheet (the sheet-shaped resin shaped body having a three-dimensional mesh-like structure skeleton).

(Nickel Plating)

A nickel-coating layer was formed by performing nickel plating with a coating weight of 350 g/m$^2$ on the polyurethane sheet in which the surface of the skeleton had been made conductive as described above. A nickel sulfamate plating liquid was used as a plating liquid. A sulfamate bath was an aqueous solution containing 450 g/L of nickel sulfamate and 30 g/L of boric acid, and the sulfamate bath was controlled at pH 4. Nickel plating was performed at a temperature of 55°C and a current density of 20 ASD (A/dm$^2$). A resin structure containing nickel was produced accordingly.

(Tin Plating)

A tin-coating layer was formed by performing tin plating with a coating weight of 20 g/m$^2$ on the surface of the produced resin structure containing nickel. As a tin plating liquid, a liquid having a composition containing 55 g/L of tin (II) sulfate, 100 g/L of sulfuric acid, 100 g/L of cresol sulfonic acid, 2 g/L of gelatin, and 1 g/L of β-naphthol with respect to 1000 g of water was used. The temperature of a plating bath was set to 20°C, and the anode current density was set to 1 A/dm$^2$. The plating liquid was agitated at 2 m/min through cathode oscillation.

As a result, the tin content was 5.4 mass%.

(Removal of Resin Shaped Body and Diffusion of Metals)

The resin structure containing nickel and tin was heated at 800°C in the air for 5 minutes to remove the base (polyurethane sheet) through combustion. Since the metals in the surface of the skeleton of the porous body were also partially oxidized in this process, subsequent metal reduction and metal diffusion were further performed in a reducing (hydrogen) atmosphere at 1000°C for 30 minutes.

(Cooling of Porous Body)

The heated porous body was cooled to 550°C at a rate 90 °C/min.

(Rolling of Porous Body)

The cooled porous body was rolled to a thickness of 0.3 mm by using a roller press machine to produce a porous metal body No. 1.

[Example 2]

- Porous Metal Body No. 2 -

A porous metal body No. 2 was produced in the same manner as that for the porous metal body No. 1 except that the coating weight of nickel plating was 350 g/m$^2$, the coating weight of tin plating was 40 g/m$^2$, and the tin content was 10 mass% in the production of the porous metal body No. 1.

[Example 3]

- Porous Metal Body No. 3 -

A porous metal body No. 3 was produced in the same manner as that for the porous metal body No. 1 except that the coating weight of nickel plating was 350 g/m$^2$, the coating weight of tin plating was 65 g/m$^2$, and the tin content was 15 mass% in the production of the porous metal body No. 1.

[Example 4]

- Porous Metal Body No. 4 -

A porous metal body No. 4 was produced in the same manner as that for the porous metal body No. 1 except that the coating weight of nickel plating was 300 g/m$^2$, the coating weight of tin plating was 80 g/m$^2$, and the tin content was 20 mass% in the production of the porous metal body No. 1.

[Example 5]

- Porous Metal Body No. 5 -

A porous metal body No. 5 was produced in the same manner as that for the porous metal body No. 1 except that the coating weight of nickel plating was 300 g/m$^2$, the coating weight of tin plating was 95 g/m$^2$, and the tin content was 25 mass% in the production of the porous metal body No. 1.

[Example 6]

- Porous Metal Body No. 6 -

A porous metal body No. 6 was produced in the same manner as that for the porous metal body No. 1 except that the porous metal body was rolled to a thickness of 0.10 mm in the production of the porous metal body No. 1.

[Example 7]

- Porous Metal Body No. 7 -

A porous metal body No. 7 was produced in the same manner as that for the porous metal body No. 2 except that the porous metal body was rolled to a thickness of 0.10 mm in the production of the porous metal body No. 2.

[Example 8]

- Porous Metal Body No. 8 -

A porous metal body No. 8 was produced in the same manner as that for the porous metal body No. 3 except that the porous metal body was rolled to a thickness of 0.10 mm in the production of the porous metal body No. 3.

[Example 9]

- Porous metal body No. 9 -

A porous metal body No. 9 was produced in the same manner as that for the porous metal body No. 4 except that the porous metal body was rolled to a thickness of 0.10 mm in the production of the porous metal body No. 4.

[Example 10]

- Porous Metal Body No. 10 -

A porous metal body No. 10 was produced in the same manner as that for the porous metal body No. 5 except that the porous metal body was rolled to a thickness of 0.10 mm in the production of the porous metal body No. 5.

[Example 11]

- Porous Metal Body No. 11 -

A porous metal body No. 11 was produced in the same manner as that for the porous metal body No. 1 except that the cooling rate was 30 °C/min in the production of the porous metal body No. 1.

[Example 12]

- Porous Metal Body No. 12 -

A porous metal body No. 12 was produced in the same manner as that for the porous metal body No. 2 except that the cooling rate was 30 °C/min in the production of the porous metal body No. 2.

[Example 13]

- Porous Metal Body No. 13 -

A porous metal body No. 13 was produced in the same manner as that for the porous metal body No. 3 except that the cooling rate was 30 °C/min in the production of the porous metal body No. 3.

[Example 14]

- Porous Metal Body No. 14 -

A porous metal body No. 14 was produced in the same manner as that for the porous metal body No. 4 except that the cooling rate was 30 °C/min in the production of the porous metal body No. 4.

[Example 15]

- Porous Metal Body No. 15 -

A porous metal body No. 15 was produced in the same manner as that for the porous metal body No. 5 except that the cooling rate was 30 °C/min in the production of the porous metal body No. 5.

[Example 16]

- Porous Metal Body No. 16 -

A porous metal body No. 16 was produced in the same manner as that for the porous metal body No. 6 except that the cooling rate was 30 °C/min in the production of the porous metal body 6.

[Example 17]

- Porous Metal Body No. 17 -

A porous metal body No. 17 was produced in the same manner as that for the porous metal body No. 7 except that the cooling rate was 30 °C/min in the production of the porous metal body No. 7.

[Example 18]

- Porous Metal Body No. 18 -

A porous metal body No. 18 was produced in the same manner as that for the porous metal body No. 8 except that the cooling rate was 30 °C/min in the production of the porous metal body No. 8.

[Example 19]

- Porous Metal Body No. 19 -

A porous metal body No. 19 was produced in the same manner as that for the porous metal body No. 9 except that the cooling rate was 30 °C/min in the production of the porous metal body No. 9.

[Example 20]

- Porous Metal Body No. 20 -

A porous metal body No. 20 was produced in the same manner as that for the porous metal body No. 10 except that the cooling rate was 30 °C/min in the production of the porous metal body No. 10.

[Example 21]

- Porous Metal Body No. 21 -

A porous metal body No. 21 was produced in the same manner as that for the porous metal body No. 1 except that chromium plating was further performed after tin plating in the production of the porous metal body No. 1. Chromium plating was performed as described below.

(Chromium Plating)

A chromium-coating layer was formed by performing chromium plating with a coating weight of 5 $g/m^2$ on the surface of the resin structure having the nickel-coating layer and the tin-coating layer on the surface of the skeleton of the polyurethane sheet.
A hexavalent chromium bath was used as a chromium plating liquid. The temperature of a plating bath was set to 35°C, and the anode current density was set to 15 $A/dm^2$. The plating liquid was agitated at 3 m/min through cathode oscillation.

As a result, the chromium content was 1.2 mass%.

[Example 22]

- Porous Metal Body No. 22 -

A porous metal body No. 22 was produced in the same manner as that for the porous metal body 21 except that chromium plating with a coating weight of 20 g/m$^2$ was performed in the production of the porous metal body No. 21.
The chromium content of the porous metal body No. 22 was 4.6 mass%.

[Comparative Example 1]

- Porous Metal Body 23-

A porous metal body 23 was produced in the same manner as that for the porous metal body 1 except that the coating weight of nickel plating was 350 g/m$^2$, the coating weight of tin plating was 10 g/m$^2$, and the tin content was 3 mass% in the production of the porous metal body 1.

[Comparative Example 2]

- Porous Metal Body No. 24 -

A porous metal body No. 24 was produced in the same manner as that for the porous metal body No. 8 except that the porous metal body was rolled to a thickness of 0.008 mm in the production of the porous metal body 8.

[Comparative Example 3]

- Porous Metal Body No. 25 -

In the production of the porous metal body No. 1, the porous metal body was slowly cooled at a rate of 10 °C/min in a furnace rather than rapid cooling. As a result, the porous metal body hardened, and the porous metal body fractured when about to be rolled to a thickness of 0.5 mm or less. For this, the porous metal body was rolled to a thickness of 0.80 mm to provide a porous metal body No. 25.

[Comparative Example 4]

- Porous Metal Body No. 26 -

In the production of the porous metal body No. 2, the porous metal body was slowly cooled at a rate of 10 °C/min in a furnace rather than rapid cooling. As a result, the porous metal body hardened, and the porous metal body fractured when about to be rolled to a thickness of 0.5 mm or less. For this, the porous metal body was rolled to a thickness of 0.80 mm to provide a porous metal body No. 26.

[Comparative Example 5]

- Porous Metal Body No. 27 -

In the production of the porous metal body No. 3, the porous metal body was slowly cooled at a rate of 10 °C/min in a furnace rather than rapid cooling. As a result, the porous metal body hardened, and the porous metal body fractured when about to be rolled to a thickness of 0.5 mm or less. For this, the porous metal body was rolled to a thickness of 0.80 mm to provide a porous metal body No. 27.

[Comparative Example 6]

- Porous Metal Body No. 28 -

In the production of the porous metal body No. 4, the porous metal body was slowly cooled at a rate of 10 °C/min in a furnace rather than rapid cooling. As a result, the porous metal body hardened, and the porous metal body fractured when about to be rolled to a thickness of 0.5 mm or less. For this, the porous metal body was rolled to a thickness of 0.80 mm to provide a porous metal body No. 28.

[Comparative Example 7]

- Porous Metal Body No. 29 -

In the production of the porous metal body No. 1, the coating weight of nickel plating was 350 g/m$^2$, the coating weight of tin plating was 130 g/m$^2$, and the tin content was 27 mass%. As a result, the porous metal body hardened, and the porous metal body fractured when about to be rolled to a thickness of 0.5 mm or less. For this, the porous metal body was rolled to a thickness of 1.00 mm to provide a porous metal body No. 29.

[Comparative Example 8]

- Porous Metal Body No. 30 -

In the production of the porous metal body No. 1, the coating weight of nickel plating was 350 g/m$^2$, the coating weight of tin plating was 150 g/m$^2$, and the tin content was 30 mass%. As a result, the porous metal body hardened, and the porous metal body fractured when about to be rolled to a thickness of 0.5 mm or less. For this, the porous metal body was rolled to a thickness of 1.00 mm to provide a porous metal body No. 30.

[Example 23]

- Cell No. 1 -

The porous metal body No. 1 was used as a gas diffusion layer that also functions as a gas supply-discharge channel in a single polymer electrolyte fuel cell.
To assemble a single cell, a commercially available MEA (M), current collectors (3-1, 3-2), cut pieces 5 $\times$ 5 cm of the porous metal body No. 1, which serve as gas diffusion layers (4-1-1, 4-2-1), and separators (4-1, 4-2) were used to form a single cell illustrated in Fig. 1.
The MEA (M) was sandwiched between two sheets of carbon paper that constitute the current collectors (3-1, 3-2), and these components were further sandwiched between two sheets of the porous metal body No. 1, which serve as the gas diffusion layers (4-1-1, 4-2-1), from outside to form a single cell. To prevent gas from leaking from the air electrode and the hydrogen electrode, which are the gas diffusion electrodes (2-1, 2-2), the cell was sealed by crimping four corners with bolts and nuts using gaskets (not shown) as seal materials and recessed graphite plates as the separators (4-1, 4-2). This structure improved the contact between the component materials and prevented gas from leaking from the hydrogen electrode side and the air electrode side of the cell. The thickness of the graphite plate serving as a separator is about 1 mm to about 2 mm because the graphite plate is practically used in a stacked battery. However, Examples were single cells, and the thickness of the graphite plate was 10 mm to ensure the strength enough to resist crimping. This cell was defined as a cell No. 1.

[Example 24] to [Example 44]

- Cells No. 2 to No. 22 -

Cells No. 2 to No. 22 were produced in the same manner as that in Example 23 except that the porous metal body No. 1 in Example 23 was replaced by the porous metal bodies No. 2 to No. 22.

[Comparative Example 9] to [Comparative Example 16]

- Cells No. 23 to No. 30 -

Cells No. 23 to No. 30 were produced in the same manner as that in Example 23 except that the porous metal body No. 1 in Example 23 was replaced by the porous metal bodies No. 23 to No. 30.

[Evaluation]

- Measurement of Sn and Cr Concentrations -

The proportions of Sn and Cr were measured by subjecting cut pieces, 10 mm square, of the porous metal bodies No. 1 to 30 to inductively coupled plasma (ICP).

-Measurement by X-ray Diffraction -

The diffracted X-ray intensities of the porous metal body No. 1 and the porous metal body No. 23 were measured using X-ray diffraction to determine whether there was deposition of $Ni_3Sn$ and $Ni_3Sn_2$ in each porous metal body.
As a result, a peak of $Ni_3Sn$ was observed at very low intensity for the porous metal body 1. A peak of $Ni_3Sn$ was observed at some level of intensity for the porous metal body No. 23.

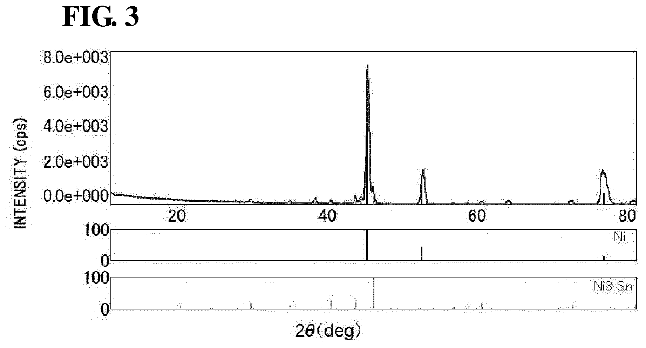

Fig. 2 shows an X-ray diffraction spectrum of the porous metal body No. 1, and Fig. 3 shows an X-ray diffraction spectrum of the porous metal body No. 23. In Fig. 2 and Fig. 3, the horizontal axis represents an angle of diffraction $2\theta$ (deg), and the vertical axis represents intensity (cps).

- Output Characteristic -

The temperature of the cells No. 1 to No. 30 was 80°C. The air and hydrogen humidified at 75°C were respectively supplied to the air electrode and the hydrogen electrode, and the power generation characteristic was determined. The power was a value at a peak of the current-voltage characteristic, and the volume for reference was a product of the effective area of the MEA × (the total thickness of the porous metal body, the carbon paper, and the MEA).
The results are shown in Table 1.

[Table 1]

| Porous metal body No. | Sn content (mass%) | Cr content (mass%) | Heat treatment | Ni$_3$Sn (XRD peak height) | Corrosion resistance | Thickness (mm) | Porosity (%) | Power per volume (kW/L) |
|---|---|---|---|---|---|---|---|---|
| 1 | 5.4 | 0 | rapid cooling (-90° C/min) | low | good | 0.3 | 86.1 | 2.4 |
| 2 | 9.7 | 0 | rapid cooling (-90° C/min) | low | good | 0.3 | 85.2 | 2.3 |
| 3 | 15.9 | 0 | rapid cooling (-90° C/min) | low | good | 0.3 | 83.8 | 2.5 |
| 4 | 21.4 | 0 | rapid cooling (-90° C/min) | low | good | 0.3 | 85.2 | 2.2 |
| 5 | 24.4 | 0 | rapid cooling (-90° C/min) | low | good | 0.3 | 84.4 | 2.3 |
| 6 | 5.6 | 0 | rapid cooling (-90° C/min) | low | good | 0.1 | 58.1 | 4.3 |
| 7 | 9.8 | 0 | rapid cooling (-90° C/min) | low | good | 0.1 | 55.4 | 4.3 |
| 8 | 15.7 | 0 | rapid cooling (-90° C/min) | low | good | 0.1 | 51.6 | 4.2 |
| 9 | 20.8 | 0 | rapid cooling (-90° C/min) | low | good | 0.1 | 55.9 | 4.4 |
| 10 | 23.6 | 0 | rapid cooling (-90° C/min) | low | good | 0.1 | 53.9 | 4.3 |
| 11 | 5.7 | 0 | rapid cooling (-30° C/min) | low | good | 0.3 | 85.8 | 2.3 |
| 12 | 10.6 | 0 | rapid cooling (-30° C/min) | low | good | 0.3 | 85.0 | 2.2 |
| 13 | 15.5 | 0 | rapid cooling (-30° C/min) | low | good | 0.3 | 84.1 | 2.3 |
| 14 | 21.5 | 0 | rapid cooling (-30° C/min) | low | good | 0.3 | 85.0 | 2.3 |

(continued)

| Porous metal body No. | Sn content (mass%) | Cr content (mass%) | Heat treatment | Ni₃Sn (XRD peak height) | Corrosion resistance | Thickness (mm) | Porosity (%) | Power per volume (kW/L) |
|---|---|---|---|---|---|---|---|---|
| 15 | 23.7 | 0 | rapid cooling (-30° C/min) | low | good | 0.3 | 84.6 | 2.2 |
| 16 | 5.6 | 0 | rapid cooling (-30° C/min) | low | good | 0.1 | 57.8 | 4.4 |
| 17 | 10.6 | 0 | rapid cooling (-30° C/min) | low | good | 0.1 | 55.3 | 4.2 |
| 18 | 15.9 | 0 | rapid cooling (-30° C/min) | low | good | 0.1 | 51.9 | 4.3 |
| 19 | 21.2 | 0 | rapid cooling (-30° C/min) | low | good | 0.1 | 55.2 | 4.1 |
| 20 | 24.2 | 0 | rapid cooling (-30° C/min) | low | good | 0.1 | 53.3 | 4.0 |
| 21 | 15.9 | 1.2 | rapid cooling (-90° C/min) | low | good | 0.3 | 83.8 | 4.1 |
| 22 | 14.5 | 4.6 | rapid cooling (-90° C/min) | low | good | 0.3 | 83.3 | 4.2 |
| 23 | 2.7 | 0 | rapid cooling (-90° C/min) | N/D | Ni leaking | 0.3 | 86.5 | not evaluated |
| 24 | 15.7 | 0 | rapid cooling (-90° C/min) | high | good | 0.08 | 39.8 | 1.1 |
| 25 | 5.5 | 0 | furnace cooling (-10° C/min) | high | good | 0.8 | 94.8 | 1.8 |
| 26 | 10.5 | 0 | furnace cooling (-10° C/min) | high | good | 0.8 | 94.4 | 1.6 |
| 27 | 15.6 | 0 | furnace cooling (-10° C/min) | high | good | 0.8 | 94.0 | 1.7 |
| 28 | 20.6 | 0 | furnacecooling(-10° C/min) | high | good | 0.8 | 93.6 | 1.5 |

| Porous metal body No. | Sn content (mass%) | Cr content (mass%) | Heat treatment | Ni$_3$Sn (XRD peak height) | Corrosion resistance | Thickness (mm) | Porosity (%) | Power per volume (kW/L) |
|---|---|---|---|---|---|---|---|---|
| 29 | 26.8 | 0 | rapid cooling (-90° C/min) | high | good | 1.0 | 94.3 | 1.2 |
| 30 | 30.4 | 0 | rapid cooling (-90° C/min) | high | good | 1.0 | 94.0 | 1.1 |

The porous metal bodies No. 1 to No. 5 of Examples 1 to 5 were able to be thinned by rolling because $Ni_3Sn$ was deposited in trace amounts. The cells No. 1 to No. 5 of Examples 23 to 27 including the porous metal bodies No. 1 to No. 5 thus had high volume power densities. The porous metal bodies No. 6 to No. 10 of Examples 6 to 10 did not fracture although they were rolled to a smaller thickness, and the cells No. 6 to No. 10 of Examples 28 to 32 including the porous metal bodies No. 6 to No. 10 had higher volume power densities.

The porous metal body No. 23 of Comparative Example 1 had no $Ni_3Sn$, but had low corrosion resistance because the Sn content was too small. Due to the porous metal body No. 23 with low corrosion resistance, Ni leaking was observed in the cell No. 23 of Comparative Example 9 including the porous metal body No. 23.

In Comparative Example 10, the porous metal body No. 24 of Comparative Example 2 formed by rolling the porous body of Example 8 to 0.08 mm was used, but power generation performance was low. The use of the thinner porous body even resulted in a lower power density. This may be because the porous body was too thin and the fuel gas supply was delayed. The porous metal bodies No. 25 to No. 28 of Comparative Examples 3 to 6 exhibited corrosion resistance, but fractured upon rolling. The porous metal bodies No. 25 to No. 28 were able to be thinned only to 0.8 mm. Thus, the cells of Comparative Examples 11 to 14 including the porous metal bodies No. 25 to No. 28 had low power densities. The porous metal bodies No. 29 and No. 30 of Comparative Examples 7 and 8 were unable to be rolled because they were harder and more brittle. The cells of Comparative Examples 15 and 16 including the porous metal bodies No. 29 and No. 30 had the lowest power density.

Reference Signs List

M      Membrane electrode assembly (MEA)
1      Ion exchange membrane
2-1    Gas diffusion electrode (active carbon layer containing platinum catalyst)
2-2    Gas diffusion electrode (active carbon layer containing platinum catalyst)
3-1    Current collector
3-2    Current collector
4-1    Separator
4-1-1  Gas diffusion layer
4-2    Separator
4-2-1  Gas diffusion layer

**Claims**

1. A fuel cell comprising a porous metal body as a gas diffusion layer, the porous metal body having a three-dimensional mesh-like structure skeleton and containing at least nickel and tin, wherein
   a nickel content is 50 mass% or more,
   a tin content is 5 mass% or more and 25 mass% or less,
   the porous metal body has a thickness of 0.10 mm or more and 0.50 mm or less,
   the porous metal body has a porosity of 51% or more and 90% or less, and
   the porous metal body optionally further contains chromium, and a chromium content is 1 mass% or more and 5 mass% or less.

2. A method for producing a porous metal body for use in the fuel cell of claim 1 having a three-dimensional mesh-like structure skeleton and containing at least nickel and tin, the method comprising:

   a step of subjecting a surface of a skeleton of a resin shaped body having a three-dimensional mesh-like structure skeleton to an electrical conduction treatment by applying an electrical conduction material containing a tin powder to the surface of the skeleton of the resin shaped body such that the porous metal body has a tin content of 5 mass% or more and 25 mass% or less;
   a step of forming a resin structure by forming a nickel-coating layer on the resin shaped body such that the porous metal body has a nickel content of 50 mass% or more;
   a step of forming a porous body containing nickel and tin by removing the resin shaped body from the resin structure;
   a step of diffusing tin and nickel by heating the porous body at 1000°C or higher for 5 minutes or longer;
   a step of cooling the heated porous body at a rate of 30 °C/min or higher at least until the porous body has a temperature of 550°C or lower; and

a step of rolling the cooled porous body to a thickness of 0.10 mm or more and 0.50 mm or less.

3. A method for producing a porous metal body for use in the fuel cell of claim 1 having a three-dimensional mesh-like structure skeleton and containing at least nickel and tin, the method comprising:

a step of subjecting a surface of a skeleton of a resin shaped body having a three-dimensional mesh-like structure skeleton to an electrical conduction treatment;

a step of forming a resin structure by forming a tin-coating layer and a nickel-coating layer on the resin shaped body such that the porous metal body has a tin content of 5 mass% or more and 25 mass% or less and a nickel content of 50 mass% or more;

a step of forming a porous body containing nickel and tin by removing the resin shaped body from the resin structure;

a step of diffusing tin and nickel by heating the porous body at 1000°C or higher for 5 minutes or longer;

a step of cooling the heated porous body at a rate of 30 °C/min or higher at least until the porous body has a temperature of 550°C or lower; and

a step of rolling the cooled porous body to a thickness of 0.10 mm or more and 0.50 mm or less.

**Patentansprüche**

1. Brennstoffzelle mit einem porösen Metallkörper als Gasdiffusionsschicht, wobei der poröse Metallkörper ein dreidimensionales maschenartiges Strukturgerüst hat und mindestens Nickel und Zinn enthält, wobei

ein Nickelanteil 50 Massen% oder mehr beträgt,

ein Zinnanteil 5 Massen% oder mehr und 25 Massen% oder weniger beträgt,

der poröse Metallkörper eine Dicke von 0,10 mm oder größer und 0,50 mm oder kleiner hat,

der poröse Metallkörper eine Porosität von 51 % oder höher und 90 % oder kleiner hat, und

der poröse Metallkörper optional Chrom enthält und ein Chromanteil 1 Massen% oder höher und 5 Massen% oder kleiner ist.

2. Verfahren zur Herstellung eines porösen Metallkörpers zur Verwendung in der Brennstoffzelle nach Anspruch 1 mit einem dreidimensionalen maschenartigen Strukturgerüst und mit zumindest Nickel und Zinn, wobei das Verfahren umfasst:

einen Schritt, in welchem eine Oberfläche eines Gerüsts eines harzgeformten Körpers mit einem dreidimensionalen maschenartigen Strukturgerüst einer elektrischen Leitungsbehandlung unterzogen wird, indem ein elektrisches Leitmaterial, das ein Zinnpulver enthält, auf die Oberfläche des Gerüsts des harzgeformten Körpers derart aufgetragen wird, dass der poröse Metallkörper einen Zinnanteil von 5 Massen% oder höher und 25 Massen% oder kleiner hat;

einen Schritt, in welchem eine Harzstruktur gebildet wird, indem eine nickelenthaltende Schicht auf dem harzgeformten Körper derart gebildet wird, dass der poröse Metallkörper einen Nickelanteil von 50 Massen% oder höher hat;

einen Schritt, in welchem ein poröser Körper, der Nickel und Zinn enthält, gebildet wird, indem der harzgeformte Körper aus der Harzstruktur entfernt wird;

einen Schritt, in welchem Zinn und Nickel zur Diffusion gebracht werden, indem der poröse Körper bei 1000 °C oder höher für 5 Minuten oder länger ausgeheizt wird;

einen Schritt, in welchem der ausgeheizte poröse Körper bei einer Rate von 30 °C/Min. oder höher abgekühlt wird, bis zumindest der poröse Körper eine Temperatur von 550 °C oder niedriger hat; und

einen Schritt, in welchem der gekühlte poröse Körper auf eine Dicke von 0,10 mm oder größer und 0,50 mm oder kleiner gewalzt wird.

3. Verfahren zur Herstellung eines porösen Metallkörpers zur Verwendung in der Brennstoffzelle nach Anspruch 1 mit einem dreidimensionalen maschenartigen Strukturgerüst und mit zumindest Nickel und Zinn, wobei das Verfahren umfasst:

einen Schritt, in welchem eine Oberfläche eines Gerüsts eines harzgeformten Körpers mit einem dreidimensionalen maschenartigen Strukturgerüst einer elektrischen Leitungsbehandlung unterzogen wird;

einen Schritt, in welchem eine Harzstruktur gebildet wird, indem eine Schicht einer Zinnbeschichtung und eine Schicht einer Nickelbeschichtung auf den harzgeformten Körper derart aufgebracht werden, dass der poröse Metallkörper einen Zinnanteil von 5 Massen% oder höher und 25 Massen% oder niedriger und einen Nickelanteil von 50 Massen% oder höher hat;

einen Schritt, in welchem ein poröser Körper, der Nickel und Zinn enthält, gebildet wird, indem der harzgeformte Körper aus der Harzstruktur entfernt wird;

einen Schritt, in welchem Zinn und Nickel zur Diffusion gebracht werden, indem der poröse Körper bei 1000 °C oder höher für 5 Minuten oder länger ausgeheizt wird;

einen Schritt, in welchem der ausgeheizte poröse Körper mit einer Rate von 30 °C/min oder höher abgekühlt wird, bis zumindest der poröse Körper eine Temperatur von 550 °C oder niedriger hat; und

einen Schritt, in welchem der poröse Körper auf eine Dicke von 0,10 mm oder größer und 0,50 mm oder kleiner gewalzt wird.

## Revendications

1. Pile à combustible comprenant un corps de métal poreux comme une couche de diffusion gazeuse, le corps de métal poreux présentant un squelette de structure semblable à une grille tridimensionnelle et contenant au moins du nickel et de l'étain, dans laquelle

une teneur de nickel est de 50 % en masse ou plus,

une teneur d'étain est de 5 % en masse ou plus et de 25 % en masse ou moins,

le corps de métal poreux présente une épaisseur de 0,10 mm ou plus et de 0,50 mm ou moins,

le corps de métal poreux présente une porosité de 51 % ou plus et de 90 % ou moins, et

le corps de métal poreux contient de plus éventuellement du chrome, et une teneur de chrome est de 1 % en masse ou plus et de 5 % en masse ou moins.

2. Procédé de production d'un corps de métal poreux pour une utilisation dans la pile à combustible de la revendication 1 présentant un squelette de structure semblable à une grille tridimensionnelle et contenant au moins du nickel et de l'étain, le procédé comprenant :

une étape d'exposition d'une surface d'un squelette d'un corps façonné de résine ayant un squelette de structure semblable à une grille tridimensionnelle à un traitement de conduction électrique par application d'un matériau de conduction électrique contenant une poudre d'étain à la surface du squelette du corps façonné de résine de sorte que le corps de métal poreux présente une teneur d'étain de 5 % en masse ou plus et de 25 % en masse ou moins ;

une étape de formation d'une structure de résine en formant une couche de revêtement de nickel sur le corps façonné de résine de sorte que le corps de métal poreux présente une teneur de nickel de 50 % en masse ou plus ;

une étape de formation d'un corps poreux contenant du nickel et de l'étain par élimination du corps façonné de résine de la structure de résine ;

une étape de diffusion d'étain et de nickel par chauffage du corps poreux à 1 000°C ou plus pendant 5 minutes ou plus ;

une étape de refroidissement du corps poreux chauffé à une vitesse de 30°C/min ou plus au moins jusqu'à ce que le corps poreux présente une température de 550°C ou moins ; et

une étape de laminage du corps poreux refroidi jusqu'à une épaisseur de 0,10 mm ou plus et de 0,50 mm ou moins.

3. Procédé de production d'un corps de métal poreux pour une utilisation dans la pile à combustible de la revendication 1 présentant un squelette de structure semblable à une grille tridimensionnelle et contenant au moins du nickel et de l'étain, le procédé comprenant :

une étape d'exposition d'une surface d'un squelette d'un corps façonné de résine présentant un squelette de structure semblable à une grille tridimensionnelle à un traitement de conduction électrique ;

une étape de formation d'une structure de résine en formant une couche de revêtement d'étain et une couche de revêtement de nickel sur le corps façonné de résine de sorte que le corps de métal poreux présente une teneur d'étain de 5 % en masse ou plus et de 25 % en masse ou moins et une teneur de nickel de 50 % en masse ou plus ;

une étape de formation d'un corps poreux contenant du nickel et de l'étain par élimination du corps façonné de résine de la structure de résine ;

une étape de diffusion d'étain et de nickel par chauffage du corps poreux à 1 000°C ou plus pendant 5 minutes ou plus ;

une étape de refroidissement du corps poreux chauffé à une vitesse de 30°C/min ou plus au moins jusqu'à ce que le corps poreux présente une température de 550°C ou moins ; et

une étape de laminage du corps poreux refroidi jusqu'à une épaisseur de 0,10 mm ou plus et de 0,50 mm ou moins.

## FIG. 1

## FIG. 2

## FIG. 1

## FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11154517 A
- JP 2012132083 A
- JP 2012149282 A
- JP 2013008811 A
- US 2014087206 A1